**Europäisches Patentamt**

**European Patent Office**

**Office européen des brevets**

(19)

(11) Veröffentlichungsnummer : **0 677 624 A2**

# (12) EUROPÄISCHE PATENTANMELDUNG

(21) Anmeldenummer : 95108745.1

(22) Anmeldetag : 07.06.95

(51) Int. Cl.[6] : **E04D 5/10,** B29D 9/00, B32B 27/12, C08L 23/16, C08L 53/00

(43) Veröffentlichungstag der Anmeldung : **18.10.95 Patentblatt 95/42**

(84) Benannte Vertragsstaaten : **AT BE CH DE DK ES FR GB GR IE IT LI LU MC NL PT SE**

(71) Anmelder : **SARNA PATENT- UND LIZENZ-AG Industriestrasse, Postfach 177 CH-6060 Sarnen (CH)**

(72) Erfinder : **Dietschi, Hans Georg Karl Sonnenbergstrasse 34 CH-6060 Sarnen (CH)** Erfinder : **Schläpfer, Jean-Luc Claude Sandbachstrasse 2 CH-6064 Kerns (CH)**

(74) Vertreter : **Zink-Wild, Markus Peter Patentanwaltsbüro Zink, Birchlistrasse 11 CH-8173 Riedt-Neerach (Zürich) (CH)**

(54) **Kunststoffdichtungsbahnen.**

(57) Die erfindungsgemässen Kunststoffbahnen sind dadurch gekennzeichnet, dass eine Oberschicht und eine Unterschicht ein dazwischen liegendes Trägermaterial derart durchdringen, dass sie miteinander verschweisst sind, und dass die Oberschicht und die Unterschicht aufgebaut sind auf der Basis wenigstens eines Reaktorblends, ausgewählt aus der Gruppe, bestehend aus Polypropylen-Copolymeren und Ethylen-$\alpha$-olefin-copolymeren.

Es werden auch 2 Verfahren zur Herstellung dieser Kunststoffbahnen beschrieben.

Die Kunststoffbahnen können zur Abdichtung von Bauwerken verwendet werden.

EP 0 677 624 A2

Die vorliegende Erfindung betrifft Kunststoffbahnen, Verfahren zu ihrer Herstellung sowie deren Verwendung zum Abdichten von Bauwerken.

In EP 0 428 851 sind Kunststoffdichtungsbahnen beschrieben, welche aus flexiblen Polyolefinen aufgebaut sind.

Diese Kunststoffdichtungsbahnen haben zwar den Vorteil der hellen Farbe.

Bei erhöhten Temperaturen, beispielsweise im Sommer bei starker Sonneneinstrahlung, haben diese Kunststoffdichtungsbahnen den Nachteil, dass sie bei extremen mechanischen Beanspruchungen während der Verarbeitung beschädigt, insbesondere perforiert, werden können.

Diese Kunststoffdichtungsbahnen haben auch einen relativ grossen linearen thermischen Ausdehnungskoeffizienten, was in Abhängigkeit der Temperaturunterschiede, beispielsweise Tag/Nacht, Sommer/Winter, beim Verlegen der Kunststoffdichtungsbahnen zur Wellenbildung in der Fläche der Kunststoffdichtungsbahnen führen kann.

Dies kann die nachfolgenden Arbeitsabläufe beeinträchtigen, sowie ästhetisch störend sein.

Ferner sind die Ausgangsmaterialien zur Herstellung dieser Kunststoffbahnen relativ teuer.

In EP 0 428 851 ist auch der weitere Stand der Technik beschrieben, welcher mit diesem Hinweis auch als hierin offenbart gilt.

Es ist ein Ziel der vorliegenden Erfindung, die oben genannten Nachteile zu beseitigen.

Es soll insbesondere ein neues Material zur Verfügung gestellt werden, welches die in EP 0 428 851 erwähnten Anforderungen aufweist und zusätzlich noch verbesserte mechanische Eigenschaften, insbesondere in der Wärme, und einen reduzierten linearen mechanischen Ausdehnungskoeffizienten aufweist.

Ferner sollen die neuen Kunststoffbahnen mit Reaktorblends, welche aus kostengünstigen Ausgangsmaterialien (Monomere) aufgebaut sind, hergestellt werden. Diese Ausgangsmaterialien sollen zudem eine günstigere Energie- und Oekobilanz aufweisen.

Die neuen Kunststoffbahnen sollen ein im Vergleich zu EP 0 428 851 nochmals verbessertes Preis/Leistungsverhältnis aufweisen.

Völlig überraschend wurde gefunden, dass Reaktorblends, ausgewählt aus der Gruppe, bestehend aus Polypropylen-Copolymeren und Ethylen-$\alpha$-olefin-Copolymeren, zur Herstellung von Kunststoffbahnen mit einer Oberschicht, einer Unterschicht und einem dazwischen liegenden Trägermaterial verwendet werden können, wobei die Oberschicht und die Unterschicht das genannte Trägermaterial derart durchdringen, dass sie miteinander verschweisst sind.

Diese Erfindung ist durch die Merkmale in den unabhängigen Ansprüchen gekennzeichnet.

Bevorzugte Ausführungsformen sind in den abhängigen Ansprüchen definiert.

Zusätzlich zu den in EP 0 428 851 beschriebenen charakteristischen Merkmalen, wie
- gute thermische Alterungsbeständigkeit
- gute Witterungsbeständigkeit
- gute chemische und biologische Alterungsbeständigkeit, speziell im Kontakt mit wässrigen Medien, bituminösen Stoffen, Mikroorganismen
- gute Kälteflexibilität, geringe Versteifung bei tiefen Temperaturen
- durch Glasvlies-Einlage geringe Dimensionsänderung nach Wärmelagerung
- guter Verbund, gute Verschweissung der Schichten
- ökologische Unbedenklichkeit; keine Halogene, kein Bitumen, keine Weichmacher, keine Schwermetallstabilisatoren, keine Rauch- und/oder Geruchsbildung bei der Herstellung und der Verarbeitung, rezyklierbar, unbedenkliche Entsorgung durch Deponierung oder Verbrennung
- gute Verarbeitbarkeit, insbesondere gute Schweissbarkeit für die beschriebenen Anwendungen mit herkömmlichen Schweisstechniken und Schweissgeräten (Heissluft, Heizkeil, etc.),
  haben die erfindungsgemässen Kunststoffbahnen noch die folgenden Vorteile:
- verbesserte mechanische Eigenschaften gegenüber extremen Beanspruchungen während der Verarbeitung, insbesondere bei erhöhten Temperaturen, beispielsweise bei starker Sonneneinstrahlung im Sommer,
- verringerter linearer thermischer Ausdehnungskoeffizient,
- ein nochmals verbessertes Preis/Leistungsverhältnis.

Diese Vorteile ergeben eine erhöhte Sicherheit bei extremen mechanischen Beanspruchungen während den Verlegearbeiten. Insbesondere wird das Risiko einer Perforation der erfindungsgemässen Kunststoffbahnen stark reduziert.

Aufgrund der verbesserten Eigenschaften der erfindungsgemässen Kunststoffbahnen, insbesondere der grossen Dehnbarkeit bei erhöhten Temperaturen, wird die Ausbildung von An- und Abschlussarbeiten, wie Einfassungen, Eckausbildungen, Dachrandabschlüsse, etc., vereinfacht.

Bedingt durch den verringerten linearen thermischen Ausdehnungskoeffizienten wird eine Wellenbildung als Folge grosser Temperaturunterschiede beim Verlegen der Kunststoffbahnen wesentlich reduziert.

Dadurch wird eine erhöhte Sicherheit während des Verlegens der erfindungsgemässen Kunststoffbahnen erreicht. Zudem werden die Arbeitsabläufe vereinfacht und ästhetisch störend wirkende Wellenbildungen vermieden.

Aufgrund obiger verbesserten Eigenschaften, in Abhängigkeit der jeweiligen Anwendung und Beanspruchung, kann die Dicke der Bahn reduziert werden, was zu einem verbesserten Preis/Leistungsverhältnis und einer Einsparung an Ausgangsmaterialien (Ressourcen) führt.

Je nach Anwendung, und unter Berücksichtigung der Herstellungskosten, respektive Verkaufskosten, ist es durchaus möglich, die Oberschicht mehrschichtig zu gestalten. So kann nur der oberste Teil der Oberschicht pigmentiert sein, und der Rest der Oberschicht kann einen kostenmässig billigeren Füllstoff enthalten.

Um die wichtigsten Vorteile der erfindungsgemässen Kunststoffbahnen zu illustrieren wurde die im Beispiel von EP 0 428 851 beschriebene Kunststoffdichtungsbahn als Vergleich verwendet.

Diese Kunststoffdichtungsbahn weist folgende Eigenschaften auf:

| Prüfung | Norm | Einheit | Wert |
|---|---|---|---|
| Bahnstärke | DIN 53370 | mm | 1,8 |
| Reissfestigkeit | | | |
| 23°C längs | DIN 53455 | $N/mm^2$ | 12 |
| quer | | $N/mm^2$ | 9 |

EP 0 677 624 A2

| | | | |
|---|---|---|---|
| Reissdehnung | | | |
| 23°C längs | DIN 53455 | % | 450 |
| quer | | % | 500 |
| | | | |
| Reissdehnung | | | |
| 50°C längs | DIN 53455 | % | 350 |
| quer | | % | 400 |
| | | | |
| Reissdehnung | | | |
| 70°C längs | DIN 53455 | % | 100 |
| quer | | % | 100 |
| | | | |
| Faltbiegung in der | | | |
| Kälte | SIA 280/2 | °C | <-50 |
| | | | |
| Formänderung in der | | | |
| Wärme längs | SIA 280/3 | % | <0,1 |
| quer | | % | <0,1 |
| | | | |
| Mechanische Durch- | | | |
| schlagfestigkeit 23°C | SIA 280/14 | mm | 700 |
| 50°C | | mm | 350 |
| 70°C | | mm | 200 |
| | | | |
| linearer thermischer | | | |
| Ausdehnungs- | | | |
| koeffizient | EMPA-Methode | 1/K | $45 \times 10^{-6}$ |

Die nachfolgenden Beispiele sollen die vorliegende Erfindung illustrieren.

Beispiel 1 (Reaktorblend)

Zur Herstellung einer 1,8 mm dicken Kunststoffbahn, bei der die Oberschicht und die Unterschicht unterschiedlich beschaffen sind, wurde aus den folgenden Komponenten für die Unterschicht in einem Vertikal-Universalmischer eine Vormischung hergestellt:

4

| Komponenten-Unterschicht | Gew.-% |
|---|---|
| Polypropylen-Copolymer (Hifax CA 10 A, Himont) | 92,0 |
| Pigmente:Titandioxid, Russ | 1,0 |
| Stabilisatoren: Lichtschutzmittel, Antioxidantien | 0,2 |
| Füllstoff: Kreide | 6,8 |

Diese Vormischung wurde in einem gleichlaufenden Doppelschneckenextruder plastifiziert, homogen gemischt und über eine Breitschlitzdüse (Arbeitsbreite 0,3 m) extrudiert. Die Materialdosierung in den Extruder erfolgte über eine Differential-Dosierwaage. Die Temperatur der aus der Breitschlitzdüse austretenden bahnförmigen Masse betrug 240°C bis 250°C. Der Ausstoss lag bei 14 kg pro Stunde.

Diese bahnförmige Masse wurde von oben in den unteren Spalt eines 3-Walzen-Glättwerkes eingeführt. Gleichzeitig lief von unten über die untere Walze das Trägermaterial, ein Glasvlies mit einem Flächengewicht von 50 g/m², mit einer Geschwindigkeit von 0,9 m/Minute ein.

Um eine vollständige Durchdringung des Trägermaterials zu erhalten, wurde mit Materialvorlage gefahren. Die Temperatur der unteren Walze betrug 120°C, diejenige der mittleren Walze 90°C. Ueber den Spalt zwischen der unteren und mittleren Walze wurde die Dicke der Bahn von 1,0 mm eingestellt. Anschliessend wurde die Bahn über Kühlwalzen auf Raumtemperatur abgekühlt und aufgewickelt.

| Komponenten-Oberschicht | Gew.-% |
|---|---|
| Polypropylen-Copolymer (Hifax CA 10 A, Himont) | 92,0 |
| Pigmente:Titandioxid, Russ | 3,5 |
| Stabilisatoren: Lichtschutzmittel, Antioxidantien | 1,0 |
| Füllstoff: Kreide | 3,5 |

In einem zweiten Arbeitsgang wurde die zweite Schicht mit den Komponenten für die Oberschicht mit der im ersten Arbeitsgang hergestellten Bahn untrennbar verschweisst. Das Vormischen, Plastifizieren, Homogenisieren und Extrudieren erfolgte in der gleichen Art und Weise wie oben beschrieben.

Die aus der Breitschlitzdüse austretende bahnförmige Masse wurde in den unteren Spalt eines 3-Walzen-Glättwerkes eingeführt. Gleichzeitig lief von unten über die untere Walze die Bahn aus dem ersten Arbeitsgang ein, wobei das Trägermaterial auf die Seite mit der Materialvorlage gerichtet war.

Die Temperatur der unteren Walze betrug 90°C, diejenige der mittleren Walze 90°C.

Ueber den Spalt der unteren und mittleren Walze wurde die Dicke der Bahn von 1,8 mm eingestellt. Anschliessend wurde diese Bahn über Kühlwalzen auf Raumtemperatur abgekühlt, die Ränder wurden geschnitten, und die Bahn wurde aufgerollt.

Die so erhaltene Bahn hatte folgende Eigenschaften:

| Prüfung | Norm | Einheit | Wert |
|---|---|---|---|
| Bahnstärke | DIN 53370 | mm | 1,8 |
| Reissfestigkeit | | | |
| 23°C längs | DIN 53455 | $N/mm^2$ | 12 |
| quer | | $N/mm^2$ | 10 |
| Reissdehnung | | | |
| 23°C längs | DIN 53455 | % | 600 |
| quer | | % | 600 |
| Reissdehnung | | | |
| 50°C längs | DIN 53455 | % | 600 |
| quer | | % | 600 |
| Reissdehnung | | | |
| 70°C längs | DIN 53455 | % | 600 |
| quer | | % | 600 |
| Faltbiegung in der Kälte | SIA 280/2 | °C | <-50 |
| Formänderung in der Wärme längs | SIA 280/3 | % | <0,1 |
| quer | | % | <0,1 |
| Mechanische Durchschlagfestigkeit 23°C | SIA 280/14 | mm | 1300 |
| 50°C | | mm | 700 |
| 70°C | | mm | 450 |
| linearer thermischer Ausdehnungskoeffizient | EMPA-Methode | 1/K | $30 \times 10^{-6}$ |

Beispiel 2 (Reaktorblend, Terpolymer)

Zur Herstellung einer 1,8 mm dicken Kunststoffbahn, bei der die Oberschicht und die Unterschicht unterschiedlich beschaffen sind, wurde aus den folgenden Komponenten für die Unterschicht in einem Vertikal-Universalmischer eine Vormischung hergestellt:

| Komponenten-Unterschicht | Gew.-% |
|---|---|
| Polypropylen-Copolymer (Hifax CA 60 A, Himont) | 75,0 |
| Ethylen-Propylen-Dien-Terpolymer mit 72 Gew.-% Ethylen, 22 Gew.-% Propylen, 6 Gew.-% Dien | 17,0 |
| Pigmente:Titandioxid, Russ | 1,0 |
| Stabilisatoren: Lichtschutzmittel, Antioxidantien | 0,2 |
| Füllstoff: Kreide | 6,8 |

Diese Vormischung wurde in einem gleichlaufenden Doppelschneckenextruder plastifiziert, homogen gemischt und über eine Breitschlitzdüse (Arbeitsbreite 0,3 m) extrudiert. Die Materialdosierung in den Extruder erfolgte über eine Differential-Dosierwaage. Die Temperatur der aus der Breitschlitzdüse austretenden bahnförmigen Masse betrug 230°C. Der Ausstoss lag bei 16 kg pro Stunde.

Diese bahnförmige Masse wurde von oben in den unteren Spalt eines 3-Walzen-Glättwerkes eingeführt. Gleichzeitig lief von unten über die untere Walze das Trägermaterial, ein Glasvlies mit einem Flächengewicht von 50 g/m$^2$, mit einer Geschwindigkeit von 1 m/Minute ein.

Um eine vollständige Durchdringung des Trägermaterials zu erhalten, wurde mit Materialvorlage gefahren. Die Temperatur der unteren Walze betrug 100°C, diejenige der mittleren Walze 70°C. Ueber den Spalt zwischen der unteren und mittleren Walze wurde die Dicke der Bahn von 1,0 mm eingestellt. Anschliessend wurde die Bahn über Kühlwalzen auf Raumtemperatur abgekühlt und aufgewickelt.

| Komponenten-Oberschicht | Gew.-% |
|---|---|
| Polypropylen-Copolymer (Hifax CA 60 A, Himont) | 75,0 |
| Ethylen-Propylen-Dien-Terpolymer mit 72 Gew.-% Ethylen, 22 Gew.-% Propylen, 6 Gew.-% Dien | 17,0 |
| Pigmente:Titandioxid, Russ | 3,5 |
| Stabilisatoren: Lichtschutzmittel, Antioxidantien | 1,0 |
| Füllstoff: Kreide | 3,5 |

In einem zweiten Arbeitsgang wurde die zweite Schicht mit den Komponenten für die Oberschicht mit der im ersten Arbeitsgang hergestellten Bahn untrennbar verschweisst. Das Vormischen, Plastifizieren, Homogenisieren und Extrudieren erfolgte in der gleichen Art und Weise wie oben beschrieben.

Die aus der Breitschlitzdüse austretende bahnförmige Masse wurde in den unteren Spalt eines 3-Walzen-Glättwerkes eingeführt. Gleichzeitig lief von unten über die untere Walze die Bahn aus dem ersten Arbeitsgang ein, wobei das Trägermaterial auf die Seite mit der Materialvorlage gerichtet war.

Die Temperatur der unteren Walze betrug 70°C, diejenige der mittleren Walze 70°C.

Ueber den Spalt der unteren und mittleren Walze wurde die Dicke der Bahn von 1,8 mm eingestellt. Anschliessend wurde diese Bahn über Kühlwalzen auf Raumtemperatur abgekühlt, die Ränder wurden geschnitten, und die Bahn wurde aufgerollt.

Die so erhaltene Bahn hatte folgende Eigenschaften:

| Prüfung | Norm | Einheit | Wert |
|---|---|---|---|
| Bahnstärke | DIN 53370 | mm | 1,8 |
| Reissfestigkeit | | | |
| 23°C längs | DIN 53455 | $N/mm^2$ | 6,5 |
| quer | | $N/mm^2$ | 6 |
| Reissdehnung | | | |
| 23°C längs | DIN 53455 | % | 500 |
| quer | | % | 500 |
| Reissdehnung | | | |
| 50°C längs | DIN 53455 | % | 500 |
| quer | | % | 400 |
| Reissdehnung | | | |
| 70°C längs | DIN 53455 | % | 450 |
| quer | | % | 250 |
| Faltbiegung in der Kälte | SIA 280/2 | °C | <-50 |
| Formänderung in der Wärme längs | SIA 280/3 | % | <0,1 |
| quer | | % | <0,1 |
| Mechanische Durchschlagfestigkeit 23°C | SIA 280/14 | mm | 1300 |
| 50°C | | mm | 700 |
| 70°C | | mm | 450 |

Beispiel 3 (2 x Reaktorblend, Terpolymer)

Zur Herstellung einer 1,8 mm dicken Kunststoffbahn, bei der die Oberschicht und die Unterschicht unterschiedlich beschaffen sind, wurde aus den folgenden Komponenten für die Unterschicht in einem Vertikal-Universalmischer eine Vormischung hergestellt:

8

| Komponenten-Unterschicht | Gew.-% |
|---|---|
| Polypropylen-Copolymer (Hifax CA 10 A, Himont) | 57,0 |
| Polypropylen-Copolymer (Hifax CA 40 A, Himont) | 18,0 |
| Ethylen-Propylen-Dien-Terpolymer mit 72 Gew.-% Ethylen, 22 Gew.-% Propylen, 6 Gew.-% Dien | 17,0 |
| Pigmente:Titandioxid, Russ | 1,0 |
| Stabilisatoren: Lichtschutzmittel, Antioxidantien | 0,2 |
| Füllstoff: Kreide | 6,8 |

Diese Vormischung wurde in einem gleichlaufenden Doppelschneckenextruder plastifiziert, homogen gemischt und über eine Breitschlitzdüse (Arbeitsbreite 0,3 m) extrudiert. Die Materialdosierung in den Extruder erfolgte über eine Differential-Dosierwaage. Die Temperatur der aus der Breitschlitzdüse austretenden bahnförmigen Masse betrug 240°C bis 250°C. Der Ausstoss lag bei 14 kg pro Stunde.

Diese bahnförmige Masse wurde von oben in den unteren Spalt eines 3-Walzen-Glättwerkes eingeführt. Gleichzeitig lief von unten über die untere Walze das Trägermaterial, ein Glasvlies mit einem Flächengewicht von 50 g/m², mit einer Geschwindigkeit von 0,9 m/Minute ein.

Um eine vollständige Durchdringung des Trägermaterials zu erhalten, wurde mit Materialvorlage gefahren. Die Temperatur der unteren Walze betrug 120°C, diejenige der mittleren Walze 90°C. Ueber den Spalt zwischen der unteren und mittleren Walze wurde die Dicke der Bahn von 1,0 mm eingestellt. Anschliessend wurde die Bahn über Kühlwalzen auf Raumtemperatur abgekühlt und aufgewickelt.

| Komponenten-Oberschicht | Gew.-% |
|---|---|
| Polypropylen-Copolymer (Hifax CA 10 A, Himont) | 57,0 |
| Polypropylen-Copolymer (Hifax CA 40 A, Himont) | 18,0 |
| Ethylen-Propylen-Dien-Terpolymer mit 72 Gew.-% Ethylen, 22 Gew.-% Propylen, 6 Gew.-% Dien | 17,0 |
| Pigmente:Titandioxid, Russ | 3,5 |
| Stabilisatoren: Lichtschutzmittel, Antioxidantien | 1,0 |
| Füllstoff: Kreide | 3,5 |

In einem zweiten Arbeitsgang wurde die zweite Schicht mit den Komponenten für die Oberschicht mit der im ersten Arbeitsgang hergestellten Bahn untrennbar verschweisst. Das Vormischen, Plastifizieren, Homogenisieren und Extrudieren erfolgte in der gleichen Art und Weise wie oben beschrieben.

Die aus der Breitschlitzdüse austretende bahnförmige Masse wurde in den unteren Spalt eines 3-Walzen-Glättwerkes eingeführt. Gleichzeitig lief von unten über die untere Walze die Bahn aus dem ersten Arbeitsgang ein, wobei das Trägermaterial auf die Seite mit der Materialvorlage gerichtet war.

Die Temperatur der unteren Walze betrug 90°C, diejenige der mittleren Walze 90°C.

Ueber den Spalt der unteren und mittleren Walze wurde die Dicke der Bahn von 1,8 mm eingestellt. Anschliessend wurde diese Bahn über Kühlwalzen auf Raumtemperatur abgekühlt, die Ränder wurden geschnitten, und die Bahn wurde aufgerollt.

Die so erhaltene Bahn hatte folgende Eigenschaften:

| Prüfung | Norm | Einheit | Wert |
|---|---|---|---|
| Bahnstärke | DIN 53370 | mm | 1,8 |
| Reissfestigkeit | | | |
| 23°C längs | DIN 53455 | N/mm$^2$ | 10 |
| quer | | N/mm$^2$ | 8 |
| Reissdehnung | | | |
| 23°C längs | DIN 53455 | % | 550 |
| quer | | % | 550 |
| Reissdehnung | | | |
| 50°C längs | DIN 53455 | % | 600 |
| quer | | % | 600 |
| Reissdehnung | | | |
| 70°C längs | DIN 53455 | % | 700 |
| quer | | % | 500 |
| Faltbiegung in der Kälte | SIA 280/2 | °C | <-50 |
| Formänderung in der Wärme    längs | SIA 280/3 | % | <0,1 |
| quer | | % | <0,1 |
| Mechanische Durch-schlagfestigkeit 23°C | SIA 280/14 | mm | 1100 |
| 50°C | | mm | 600 |
| 70°C | | mm | 350 |
| linearer thermischer Ausdehnungs-koeffizient | EMPA-Methode | 1/K | 30x10$^{-6}$ |

**Patentansprüche**

1. Kunststoffbahnen, dadurch gekennzeichnet, dass eine Oberschicht und eine Unterschicht ein dazwischen liegendes Trägermaterial derart durchdringen, dass sie miteinander verschweisst sind, und dass die Oberschicht und die Unterschicht aufgebaut sind auf der Basis wenigstens eines Reaktorblends, ausgewählt aus der Gruppe, bestehend aus Polypropylen-Copolymeren und Ethylen-$\alpha$-olefin-Copolymeren.

2. Kunststoffbahnen nach Anspruch 1, dadurch gekennzeichnet, dass die Polypropylen-Copolymeren aufgebaut sind aus Polypropylen-Sequenzen und Copolymer-Sequenzen, aufgebaut aus dem Monomeren Ethylen und dem Comonomeren Propylen, insbesondere mit maximal 75 Gew.-%, vorzugsweise 60 bis 40 Gew.-%, an Polypropylen-Sequenzen und mit mindestens 25 Gew.-%, vorzugsweise 40 bis 60 Gew.-%, an Copolymer-Sequenzen, wobei die Summe der Gew.-% 100 ist.

3. Kunststoffbahnen nach einem der Ansprüche 1 bis 2, dadurch gekennzeichnet, dass die Ethylen-$\alpha$-olefin-Copolymeren aufgebaut sind aus dem Monomeren Ethylen und Comonomeren aus der Gruppe der linearen und verzweigten $\alpha$-Olefine mit 4 bis 20 Kohlenstoffatomen, insbesondere mit maximal 85 Gew.-% an Ethylen-Monomer.

4. Kunststoffbahnen nach einem der Ansprüche 1 bis 3, dadurch gekennzeichnet, dass das (die) Reaktorblend(s) kombiniert ist (sind) mit wenigstens einem Bestandteil, ausgewählt aus der Gruppe, bestehend aus
   einem Copolymeren, welches aufgebaut ist aus dem Monomeren Ethylen und dem Comonomeren Propylen, und/oder mit wenigstens einem Terpolymeren, welches aufgebaut ist aus dem Monomeren Ethylen und dem Comonomeren Propylen und wenigstens einem Dien-Monomeren, z.B. Dicyclopentadien, 2-Ethyliden-norbornen, 1,4-Hexadien.

5. Kunststoffbahnen nach einem der Ansprüche 1 bis 4, dadurch gekennzeichnet, dass die Oberschicht und/oder die Unterschicht, in Abhängigkeit von der Anwendung, noch wenigstens ein Pigment, insbesondere Titandioxid, lichtbeständige Farbpigmente, und/oder wenigstens einen Stabilisator, insbesondere Lichtschutzmittel, Antioxidantien, und/oder wenigstens einen Füllstoff, insbesondere Kreide, Kaolin, Talkum, Quarzmehl, und/oder wenigstens ein Verarbeitungshilfsmittel, insbesondere Gleitmittel, z.B. Glyzerinmonostearat, und/oder wenigstens einen Zusatzstoff, welcher die Brennbarkeit der Kunststoffbahnen reduziert, z.B. Aluminiumhydroxid, Magnesiumhydroxid, enthalten (enthält).

6. Kunststoffbahnen nach einem der Ansprüche 1 bis 5, dadurch gekennzeichnet, dass das genannte Trägermaterial derart beschaffen ist, dass es die Dimensionsbeständigkeit der Kunststoffbahnen im Herstellungsverfahren und/oder bei der Anwendung der Kunststoffbahnen gewährleistet, und insbesondere ein nicht geschlossenes, Maschenöffnungen aufweisendes Gewebe, Gelege, Gewirke oder ein Vlies, oder beliebige Kombinationen davon, aus Kunststoff- und/oder Glasfasern ist.

7. Kunststoffbahnen nach einem der Ansprüche 1 bis 6, dadurch gekennzeichnet, dass das genannte Trägermaterial ein poröses Vlies aus Glasfasern ist, welches ein Flächengewicht von 25 bis 100 g/m$^2$, vorzugsweise von 40 bis 50 g/m$^2$, hat, und wobei das genannte Vlies gegebenenfalls mit einem nicht geschlossenen, Maschenöffnungen aufweisenden Gewebe oder Gelege aus Kunststoff- oder Glasfasern, insbesondere aus Polyesterfasern, kombiniert ist.

8. Kunststoffbahnen nach einem der Ansprüche 1 bis 7, dadurch gekennzeichnet, dass die in Anspruch 4 erwähnten Copolymeren aufgebaut sind aus
   - 40 bis 80 Gew.-%, vorzugsweise 55 bis 70 Gew.-%, Ethylen-Monomer und
   - 20 bis 60 Gew.-%, vorzugsweise 30 bis 45 Gew.-%, Propylen-Comonomer,
   wobei die Summe der Gew.-% 100 ist.

9. Kunststoffbahnen nach einem der Ansprüche 1 bis 8, dadurch gekennzeichnet, dass die in Anspruch 4 erwähnten Terpolymeren aufgebaut sind aus
   - 40 bis 80 Gew.-%, vorzugsweise 65 bis 75 Gew.-%, Ethylen-Monomer und
   - 20 bis 60 Gew.-%, vorzugsweise 20 bis 26 Gew.-%, Propylen-Comonomer und
   - 2 bis 12 Gew.-%, vorzugsweise 4 bis 8 Gew.-%, Dien-Monomer,
   wobei die Summe der Gew.-% 100 ist.

10. Kunststoffbahnen nach einem der Ansprüche 1 bis 9, dadurch gekennzeichnet, dass die Oberschicht und/oder Unterschicht
- 20 bis 100 Gew.-%, vorzugsweise 30 bis 100 Gew.-%, Reaktorblend(s), und
- 0 bis 40 Gew.-%, vorzugsweise 0 bis 30 Gew.%, Copolymer(e) und/oder Terpolymere, und/oder
- 0 bis 15 Gew.-% Pigment, und/oder
- 0 bis 5 Gew.-% Stabilisator, und/oder
- 0 bis 25 Gew.-% Füllstoff, und/oder
- 0 bis 5 Gew.-% Verarbeitungshilfsmittel, und/oder
- 0 bis 60 Gew.-% Zusatzstoff, welcher die Brennbarkeit der Kunststoffbahnen reduziert,
enthalten (enthält), wobei die Summe der Gew.-% 100 ist.

11. Verfahren zur Herstellung von Kunststoffbahnen nach einem der Ansprüche 1 bis 10, dadurch gekennzeichnet, dass man in einem ersten Schritt die jeweils benötigten Rezeptur-Komponenten für die erste Schicht in einem ersten Extruder plastifiziert und homogen mischt und über eine Breitschlitzdüse extrudiert, dann mit der so erhaltenen ersten bahnförmigen Masse in einem ersten Spalt zwischen zwei Walzen, einen Schmelze-Wulst bildend, welcher unter Einwirkung von Druck das einlaufende Trägermaterial von einer Seite her durchdringt, und danach im gleichen Arbeitsgang on-line in einem zweiten Schritt die jeweils benötigten Rezeptur-Komponenten für die zweite Schicht in einem zweiten Extruder plastifiziert und homogen mischt und über eine Breitschlitzdüse extrudiert, dann mit der so erhaltenen zweiten bahnförmigen Masse in einem zweiten Spalt zwischen zwei Walzen, einen Schmelze-Wulst bildend, welcher unter Einwirkung von Druck die aus dem ersten Schritt erhaltene, einlaufende Bahn von der anderen Seite her verschweisst; und gegebenenfalls die so erhaltene Kunststoffdichtungsbahn kühlt, und/oder prägt, und/oder kaschiert, und/oder schneidet, und/oder wickelt.

12. Verfahren zur Herstellung von Kunststoffbahnen nach einem der Ansprüche 1 bis 10, dadurch gekennzeichnet, dass man in einem ersten Arbeitsgang die jeweils benötigten Rezeptur-Komponenten für die erste Schicht in einem Extruder plastifiziert und homogen mischt und über eine Breitschlitzdüse extrudiert, dann mit der so erhaltenen ersten bahnförmigen Masse in einem Spalt zwischen zwei Walzen, einen Schmelze-Wulst bildend, welcher unter Einwirkung von Druck das einlaufende Trägermaterial von einer Seite her durchdringt und das so erhaltene Produkt kühlt und aufwickelt, und danach in einem zweiten Arbeitsgang off-line die jeweils benötigten Rezepturkomponenten für die zweite Schicht in einem Extruder plastifiziert und homogen mischt und über eine Breitschlitzdüse extrudiert, dann mit der so erhaltenen zweiten bahnförmigen Masse in einem Spalt zwischen zwei Walzen, einen Schmelze-Wulst bildend, welcher unter Einwirkung von Druck die aus dem ersten Arbeitsgang erhaltene, einlaufende Bahn von der andern Seite her verschweisst; und gegebenenfalls die so erhaltene Kunststoffbahn kühlt, und/oder prägt, und/oder kaschiert, und/oder schneidet, und/oder wickelt.

13. Verwendung der Kunststoffbahnen nach einem der Ansprüche 1 bis 10 als Kunststoffdichtungsbahnen, insbesondere zur Abdichtung von Bauwerken, insbesondere von Hoch-, Tief- und Ingenieurbauten, vorzugsweise als Dachabdichtung von Flachdächern und Steildächern, welche ganz oder teilweise bewittert sind, oder als Abdichtung gegen drückendes und nichtdrückendes Wasser, welche nicht der Bewitterung ausgesetzt ist, wie z.B. beim Umkehrdach oder beim humusierten oder begeh- und/oder befahrbaren Flachdach, oder als Abdichtung auf Brücken, Galerien, Unterführungen, oder als Abdichtung im Tunnelbau, oder als Abdichtung im Dammbau, oder als Abdichtung von Speicherbecken, Auffangbecken, Wasserrückhaltebecken, beispielsweise Löschwasserbecken, Schwimmbäder, Teiche, oder zur Herstellung von Konfektions-Artikeln, wie Big-bags, Transportbänder, Planen, beispielsweise zur Abdeckung von Ladeflächen auf Fahrzeugen.